# EUROPEAN PATENT SPECIFICATION

(11) **EP 2 534 194 B1**
(45) Date of publication and mention of the grant of the patent: **24.09.2014**
(21) Application number: 11706665.4
(22) Date of filing: 02.02.2011
(51) Int. Cl.: C08J 5/18, C08L 1/12, H05K 3/28

(54) **SULFITE SOFTWOOD BASED CELLULOSE TRIACETATE FOR LCD FILMS**
SULFIT-WEICHHOLZ-ZELLULOSE-TRIACETAT FÜR LCD-FILME
TRIACÉTATE DE CELLULOSE SULFITÉE À BASE DE CONIFÈRES POUR FILMS LCD

(30) Priority: 12.02.2010 US 303810 P; 18.01.2011 US 201113008253
(43) Date of publication of application: 19.12.2012
(73) Proprietor: Eastman Chemical Company, Kingsport, TN 37660 (US)
(72) Inventor: GODFREY, Darryl, Aubrey, Gray TN 37615-3781 (US); REITFORT, Laurel, Leigh, Kingsport TN 37663 (US)
(74) Representative: Best, Michael
(86) International application number: PCT/US2011/023441
(87) International publication number: WO 2011/100145

(56) References cited:
- EP-A1- 1 300 438
- WO-A1-2007/037467
- US-A1- 2005 077 648
- DATABASE WPI Week 200535 Thomson Scientific, London, GB; AN 2005-337025 XP002631433, & JP 2005 104149 A (FUJI PHOTO FILM CO LTD) 21 April 2005 (2005-04-21)
- DATABASE WPI Week 200518 Thomson Scientific, London, GB; AN 2005-167773 XP002631434, & JP 2005 035290 A (FUJI FILM CORP) 10 February 2005 (2005-02-10)
- DATABASE WPI Week 200628 Thomson Scientific, London, GB; AN 2006-268063 XP002631435, & JP 2006 089645 A (FUJI PHOTO FILM CO LTD) 6 April 2006 (2006-04-06)
- DATABASE WPI Week 200306 Thomson Scientific, London, GB; AN 2003-061672 XP002631436, & JP 2002 265636 A (FUJI PHOTO FILM CO LTD) 18 September 2002 (2002-09-18)

## Description

### FIELD OF THE INVENTION

The present invention generally relates to using cellulose triacetate (CTA) made from sulfite-process softwood pulp to make films suitable for use in liquid crystal displays (LCDs). More particularly, the present invention relates to a dope for making a solvent-cast film containing the CTA, a method of preparing the dope, a film containing the CTA, a method of making a film containing the CTA, a polarizer plate for an LCD containing the film, and an optical lens containing the film.

### BACKGROUND OF THE INVENTION

Cellulose triacetate (CTA) is used in solvent-cast liquid crystal display (LCD) films for flat panel displays. CTA may be made from cotton linters (lint), hardwood, or softwood cellulose. Initially, only lint CTA was used for these applications, because it could be peeled more easily from the stainless steel casting substrate.

EP 1 300 438 A1 discloses combinations of stabilizers and polymer components of display elements to provide protection against the effect of heat, moisture and oxygen. In particular, the use of a combination of an acid scavenger compound, a hindered amine compound and a hindered phenol compound in cellulose acetate film for the fabrication of protective films for polarizers for use in display applications is disclosed.

WO 2007/037467 A1 discloses a method and an apparatus for producing a polymer film. The polymer film is formed by casting a dope containing a polymer and a solvent onto a support. The polymer is preferably cellulose acylate.

US 2005/077648 A1 discloses a polymer film and a solution casting method for producing the polymer film which is excellent in optical properties and has a thickness in the range of 10 µm to 60 µm. The polymer film is formed by casting a dope containing polymer on a support. The polymer is preferably cellulose acetate.

JP 2005/104149 A discloses a cellulose acylate film forming method and film product. Cellulose acylate is dissolved in a mixed solvent to manufacture a dope, which is then cast on a support to form a film.

JP 2005/035290 A discloses a solution film forming method and film product where a dope with cellulose triacetate as a polymer is prepared to be cast on a casting band from a casting die to form a cast film.

JP 2006/089645 A discloses a method for producing a cellulose acylate film where the amount of a solvent contained in the cellulose acylate film is reduced.

JP 2002/265636 A discloses a cellulose acylate film and method for producing the same by using a chlorine-free solvent. Instead of using methylene chloride as a solvent methyl acetate is used to reduce the influence on the human body and environment. The film is produced by casting a dope containing cellulose acetyl on a metal support.

As the LCD film market grew, the price of high-quality lint cellulose used to make CTA increased substantially relative to the price of hardwood and softwood pulps. LCD film growth was projected to exceed lint cellulose supply, so in 2004 a major LCD film caster implemented co-casting dies that allowed a core of hardwood CTA with thin outer layers of lint CTA to be cast.

Other LCD film casters currently use only lint CTA in LCD films ranging from 22 to 80 microns thick.

Thus, there is a continuing need in the art for LCD films to be made from cheaper sources of CTA such as from softwood pulp. The present invention is directed to addressing this need as well as others that will become apparent from the following description and claims.

### SUMMARY OF THE INVENTION

It has been surprisingly discovered that a combination of additives in the film casting dope plus control of metal and sulfur content of the CTA allow a softwood CTA having low sulfur content to exhibit peeling characteristics from the casting substrate that are similar to those of lint-based CTA of similar sulfur content. Additionally, it has been surprisingly discovered that the softwood CTA casting dope can provide a film with less haze, greater toughness, and comparable color to a film made from lint-based CTA. This film caster has recently extended this technology to allow films to be made using 90% hardwood CTA and 10% lint CTA and to use 100% hardwood CTA with the certain additives and film casting technology.

Thus, in one aspect, the present invention provides a dope for making a solvent-cast film. The dope comprises:
(a) cellulose triacetate made from sulfite-process softwood pulp and having less than 35 ppm of sulfur and less than 1 weight percent of xylose, both based on the weight of the cellulose triacetate, and a molar ratio of metals to sulfate of at least 3:1;
(b) an acid scavenger;
(c) a chelating agent; and
(d) a solvent.

Thus, in one aspect, the present invention provides a dope for making a solvent-cast film. The dope comprises:
(a) cellulose triacetate made from sulfite-process softwood pulp and having less than 35 ppm of sulfur and less than 2 weight percent of xylose, both based on the weight of the cellulose triacetate, and a molar ratio of metals to sulfate of at least 3:1;
(b) an acid scavenger;
(c) a chelating agent; and
(d) a solvent.

In another aspect, the present invention provides a method of preparing the dope. The method comprises:
(a) combining the cellulose triacetate, the acid scavenger, and the solvent together to form a solution; and
(b) adding the chelating agent to the solution from step (a) to form the dope.

In another aspect, the present invention provides a film comprising:
(a) cellulose triacetate made from sulfite-process softwood pulp and having less than 35 ppm of sulfur and less than 1 weight percent of xylose, both based on the weight of the cellulose triacetate, and a molar ratio of metals to sulfate of at least 3:1;
(b) an acid scavenger; and
(c) a chelating agent.

In another aspect, the present invention provides a film comprising:
(a) cellulose triacetate made from sulfite-process softwood pulp and having less than 35 ppm of sulfur and less than 2 weight percent of xylose, both based on the weight of the cellulose triacetate, and a molar ratio of metals to sulfate of at least 3:1;
(b) an acid scavenger; and
(c) a chelating agent.

In another aspect, the present invention provides a method of making a film. The method comprises:
(a) casting the dope according to the invention onto a continuously moving support to form a cast film on the support;
(b) partially drying the cast film;
(c) separating the cast film from the support; and
(d) drying the separated film.

In another aspect, the present invention provides a polarizer plate for a liquid crystal display, wherein the polarizer plate comprises films according to the invention.

In another aspect, the present invention provides an optical lens comprising films according to the invention.

### DETAILED DESCRIPTION OF THE INVENTION

The dope for making a solvent-cast film according to the invention comprises four main components. The first main component is a cellulose triacetate made from sulfite-process softwood pulp and having less than 35 ppm of sulfur and less than 1 weight percent of xylose, both based on the weight of the cellulose triacetate, and a molar ratio of metals to sulfate of at least 3:1. Alternatively, the first main component is a cellulose triacetate made from sulfite-process softwood pulp and having less than 35 ppm of sulfur and less than 2 weight percent of xylose, both based on the weight of the cellulose triacetate, and a molar ratio of metals to sulfate of at least 3:1.

By "sulfite-process softwood pulp," it is meant wood pulp made from softwood trees such as spruce, pine, fir, larch, hemlock, using the sulfite process. The sulfite process produces wood pulp that is almost pure cellulose fibers by using various salts of sulfurous acid to extract the lignin from softwood chips in large pressurized vessels. The salts used are either sulfites or bisulfites, and the counter ions are typically sodium, calcium, potassium, or magnesium. The cellulose fibers are subsequently acetylated to yield cellulose triacetate (CTA).

Without wishing to be bound by theory, it is believed that sulfite-process cellulose has branched xylan chains, which when acetylated, are more soluble in the film casting solvent than are the linear xylan chains of prehydrolyzed kraft (PHK) cellulose-based CTA.

In another embodiment, the CTA has less than 25 ppm of sulfur. In another embodiment, the CTA has 8 to 15 ppm of sulfur.

In another embodiment, the CTA has 0.8 weight percent or less of xylose. In another embodiment, the CTA has 0.5 to 0.6 weight percent of xylose. In other embodiments, the CTA may have a xylose content up to 1.5 or 2 weight percent. In other embodiments, the CTA may have a xylose content from 0.5 to 1.5 or from 0.5 to 2 weight percent. In other embodiments, the CTA may have a xylose content 0.5 to 0.8 weight percent. In these embodiments, the CTA may also have a mannose content ranging from 0.5 to 1.5 weight percent or from 0.5 to 1.2 weight percent or from 0 to 1.5 weight percent.

In another embodiment, the CTA has at least 98 weight percent of α-cellulose, which is generally made from a high-purity grade cellulose. In another embodiment, the CTA has at least 96 weight percent of α-cellulose, which is generally made from a high-purity grade cellulose.

In another embodiment, the CTA has a molar ratio of metals to sulfate ranging from 3:1 to 5:1, or 3:1 to 11:1, or 3:1 to 16:1. The metals, as noted above, typically include sodium, calcium, potassium, and/or magnesium, and can be in ionic form or bound as a salt.

The CTA for use in the present invention can have any combination of sulfur content, xylose content, α-cellulose content, and molar ratio of metals to sulfate mentioned herein. The CTA having the properties described herein is commercially available from Eastman Chemical Company and may be made according to the process described in U.S. Patent No. 6,924,010; the entire content of which is hereby incorporated by reference.

The CTA is usually present in the dope in an amount ranging from 15 to 23 weight percent, based on the weight of the dope.

The second main component of the dope according to the present invention is an acid scavenger such as epoxidized soybean oil (ESO) (CAS No. 8013-07-8). ESO is commercially available from various manufacturers such as from Chemtura Corporation under the name Drapex® 6.8. Epoxidized plant oils (EPO) which can be represented and exemplified by compositions of various epoxidized long chain fatty acid triglycerides (for example, epoxidized soybean oil and epoxidized linseed oil and other unsaturated natural oils (these are occasionally called epoxidized natural glycerides or unsaturated fatty acid and these fatty acid have 12-22 carbon atoms). These acid scavengers may be used in all embodiments of the dope and/or film of the present invention.

Without wishing to be bound by theory, it is believed that the acid scavenger reacts with free acetic acid in the CTA to prevent the acid from causing odor, discoloration, and further hydrolysis of the CTA, which would change the optical and physical properties of the resulting film.

The acid scavenger is typically present in the dope in an amount ranging from 0.1 to 1 weight percent, based on the total weight of the dope.

The third main component of the dope according to the present invention is a chelating agent such as citric acid. The chelating agent is usually present in the dope in an amount ranging from 0.01 to 0.1 weight percent, based on the total weight of the dope. Other non-limiting examples of chelating agents include, but are not limited to, tartaric acid, oxalic acid, alkali metal (Group I of the Period Table) salts of the acids, alkaline earth metal (Group II of the Periodic Table) salts of the acids, or mixtures thereof. These chelating agents may be used in all embodiments of the dope and/or film of the present invention.

Without wishing to be bound by theory, it is believed that the chelating agent complexes with the poorly soluble metal sulfate salts remaining in the CTA to inhibit their further precipitation onto the casting substrate.

The fourth main component of the dope according to the invention is a solvent. The typical solvent for a casting dope includes methylene chloride and from 6 to 20 weight percent of methanol, ethanol, or both, based on the weight of the solvent. More typically, the solvent would be a 90/10 weight mixture of methylene chloride and methanol or ethanol.

The dope usually contains from 65 to 75 weight percent of the solvent.

The dope according to the invention may contain additional additives such as anti-solvents (e.g., n-butanol or isopropanol), hindered amine light stabilizers (HALS), dyes, plasticizers, UV-absorbers, flame retardants, matting agents, etc.

The dope according to the invention can be prepared by first blending the CTA and the acid scavenger with the solvent in a suitable mixing device, such as a stirred container, to form a solution. The chelating agent is then added to the solution to form the dope.

The dope according to the invention can be used to form solvent cast films using techniques known in the art. For example, the dope can be cast either by gravity or pressure onto a support such as a rotating belt or drum to form a cast film on the support. After casting, the cast film is partially dried to leave a residual solvent content of, for example, 12 to 17 weight percent or from 12 to 30 weight percent. The partially dried cast film is then separated from the support such as by a peeling roll. The separated film then undergoes additional drying to form the final film.

The film according to the present invention comprises the CTA, acid scavenger, and chelating agent as its main components. In particular, the resulting film typically contains from 80 to 95 weight percent of the CTA, from 1 to 5 weight percent of the acid scavenger, and 0.1 to 0.5 weight percent of the chelating agent. The film may contain up to 10 weight percent of other additives.

The film according to the invention can vary in thickness, depending on the end-use application. For example, the film can have a thickness ranging from 20 to 100 microns. Particularly preferred are films having a thickness in the range of 40 to 80 microns for use in LCDs.

The film according to the invention is suitable for use in various applications, such as in a polarizer plate for an LCD. A polarizer plate in an LCD has a polarizer protective film attached to at least one side of a polarizer. Typically, a polarizer is obtained by dyeing a stretched polyvinyl alcohol (PVA) film with iodine or a dichroic dye. In most cases, a CTA film is used as the protective film for the PVA film and can be attached directly to it. The surface of the CTA film may be saponified with an alkaline solution to enhance adhesion in the polarizer assembly.

The film according to the invention can also be used as a component of an optical lens, such as in a camera, telescope, or eyeglasses including sunglasses and 3-D glasses. The film may also be used in combination with a polarizer, as discussed above, in the lens of optical microscopes and sunglasses.

This invention can be further illustrated by the following examples of preferred embodiments thereof, although it will be understood that these examples are included merely for purposes of illustration and are not intended to limit the scope of the invention.

### EXAMPLES

### Testing Methodology

The intrinsic viscosity (IV) of the CTA was determined according to ASTM method D 871-91, "Standard Test Methods of Testing Cellulose Acetate" using a Viscotek Y501V viscometer. Intrinsic viscosity is defined to be the limit of the natural logarithm of the relative viscosity to the concentration as the concentration goes to zero. The solvent used was N-methylpyrrolidone.
ASTM D 1343-91 was used to determine the viscosity of the CTA.

ASTM D 882 was used to determine break strain, break stress, yield strain, yield stress, and Young's modulus of the film.

ASTM D 1003 was used to determine film haze and transmittance.

ASTM E 1164 was used to obtain spectrophotometric data for color evaluations, and ASTM E 308 was for color computation using the CIE system.

For Examples 1-24, film thickness retardation (Rth) and planar retardation (Re) were determined using a Woollam ellipsometer. For Examples 25-28, Rth was determined using a COBRA-WR instrument.

Qualitative Peel Strength Test - A screening test was used in which films were peeled by hand and assigned a qualitative rating of 1 to 3, with 1 reflecting easy peel with no sticking, 2 being moderate peel force needed but no residue remaining on the plate, and 3 representing strong force to peel, tearing of the film, or a residue left on the plate.

Quantitative Peel Strength Test - In order to measure the peeling force of various films more precisely, an Instron tensile tester was employed. Actual film casting belt material from the manufacturer of commercial casting belts was obtained and used as the substrate for the peeling force testing. The films were cast to achieve a final thickness of 60 microns. They were cast 2 inches (5.08 cm) in width and approximately 10 inches (25.4 cm) in length. The metal plate was mounted horizontally in the Instron tensile tester and the film was pulled vertically. The plate was mounted on a sled allowing for it to move laterally to maintain a constant 90° angle during the measurement. The force required to peel the film from the plate was measured by a load cell as the film peeled at a rate of 100 inches/minute. This force was measured along the entire length of the plate. The peel strength was reported as the average force (grams) over the length of the film.

### Laboratory Film Casting Device

A laboratory film casting device was designed and constructed in order to prevent scratching of the mirror surface of the substrate, give a uniform width and length sample for testing, and reduce film thickness variation.

The laboratory film casting apparatus had a metal support with Teflon guide bars attached. Four toggle clamps were used to secure a 5-inch wide by 10-inch long piece of stainless steel film casting belt. The Teflon guide bars were spaced to allow a 2-inch wide drawdown knife to move the length of the metal plate. The drawdown knife has adjustment knobs that can change the gap between the blade and the metal plate to allow casting of different thickness films.

### Materials

The cellulose triacetates, VM114 and VM149, are commercially available from Eastman Chemical Company and were made according to the procedures described in U.S. Patent No. 6,924,010. VM114 was made of sulfite-process softwood pulp, and VM149 was made from cotton linters. The average properties of VM114 and VM149 are reported in Table 1.

**Table 1**

| | **VM114** | **VM 149** |
|---|---|---|
| Wt% Xylose | 0.48 | 0.08 |
| Wt% Mannose | 0.58 | 0.08 |
| Cellulose Type | sulfite-process softwood pulp | cotton linters |
| Molecular Wt. Distribution | | |
| Mn | 79,170 | 82,807 |
| Mw | 282,358 | 278,055 |
| Mz | 727,540 | 703,604 |
| Polydispersity | 3.57 | 3.39 |
| IV (dL/g) | 2.32 | 2.40 |
| Viscosity (sec) | 71.8 | 45.9 |
| Wt% Acetyl | 43.58 | 43.51 |
| Color | 69 | 33 |
| Haze (%) | 5.4 | 4.0 |
| Elemental Analysis (ppm) | | |
| sulfur | 13 | 9 |
| magnesium | 52 | 2 |
| iron | 1 | 1 |
| calcium | 5 | 33 |
| sodium | 5 | 2 |
| potassium | 3 | 1 |
| total metals | 66 | 39 |

The chelating agent used was citric acid.

The epoxidized soybean oil used was Drapex 6.8.

Triphenyl phosphate and carboxymethyl ethylphthalate were used as plasticizers.

Tinuvin 328 and Neo Heliopan 357 were used as typical UV inhibitors in the pressure casting trial (Examples 25-28).

Methanol, methylene chloride, and n-butanol were used as the solvents in the statistically designed experiments (Examples 1-24), but only methanol and methylene chloride were used in the pressure casting trial.

### Examples 1-24

### Dope Preparation

The CTA samples (VM114) were dried in a forced draft oven for 2 hours at 105°C, and then they were placed into a desiccator to cool. The solvents and additives were weighed and mixed in round bottles. The CTA was added slowly to the solvent in order to wet the individual particles and to reduce clumping. The bottle containing this mixture was placed into a paint shaker for 18 minutes. After this, the bottles were moved to a mechanical roller overnight to complete dissolution of the CTA. The bottles were removed from the roller and allowed to stand until the bubbles in the solutions dissipated.

### Film Preparation

60-micron thick films were hand cast on the laboratory film casting device and dried to 10-12 wt% residual solvent content. This level was chosen to simulate the low end of the 10 wt% - 30 wt% typical residual solvent content range encountered when commercial LCD films are peeled from the casting belt. Experience has shown that the higher the residual solvent content, the less force that is needed to peel the film. However, if solvent content is too high, the films will distort when peeled and be useless.

To cast the films, the solution was poured onto one end of the metal plate, then the drawdown blade was quickly pulled the length of the plate. The plate was then removed from the casting apparatus and placed into a film curing cabinet that was located inside a fume hood. The cabinet allowed evaporation of the solvents at a controlled rate. The necessary time to reach the 10-12 wt% residual solvent was determined by measuring the solvent content of films at 10 minute intervals of curing time in the cabinet. This time was determined to be approximately 1 hour. The curing time is well understood to be dependent on relative humidity, which must be monitored, because higher humidity retards solvent evaporation.

The composition of each dope and film, and the film's properties are reported in Table 2.

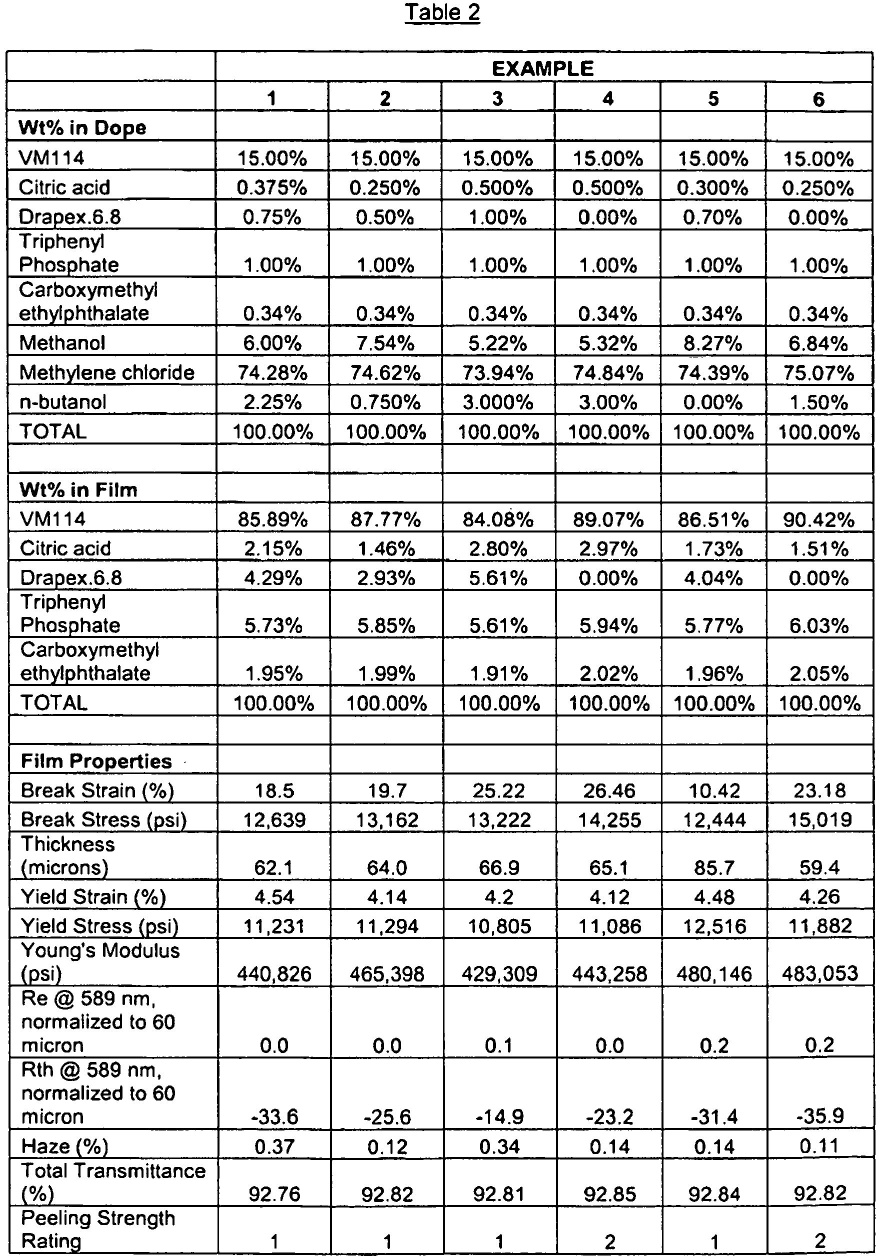

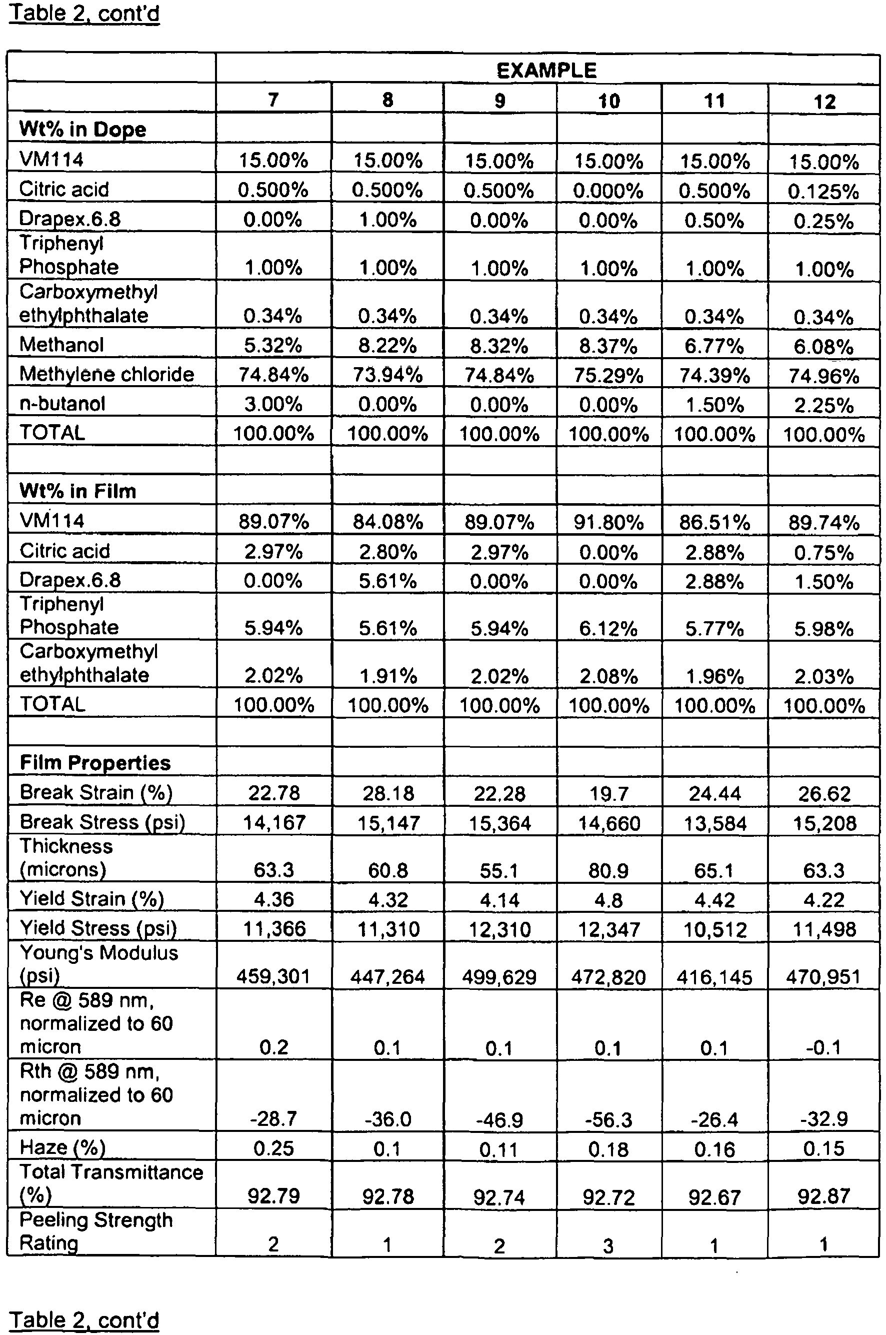

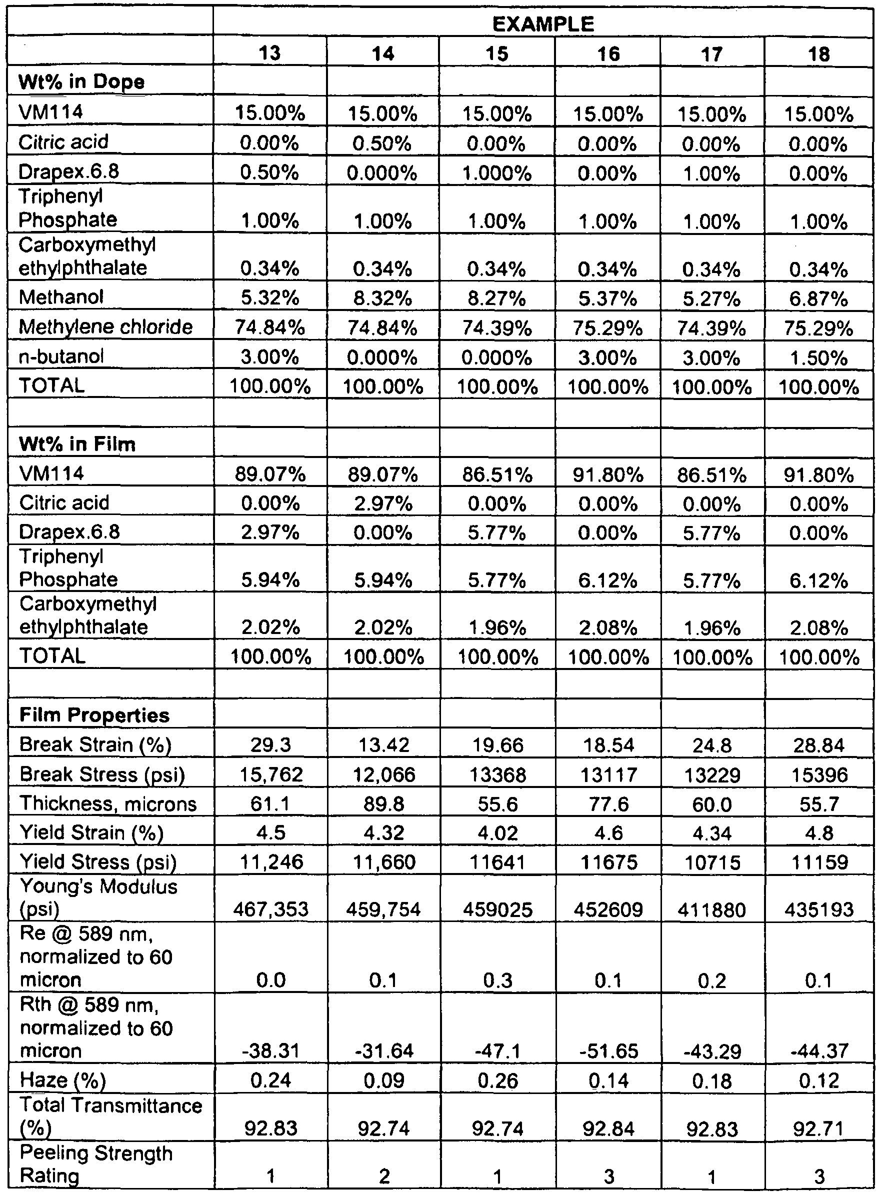

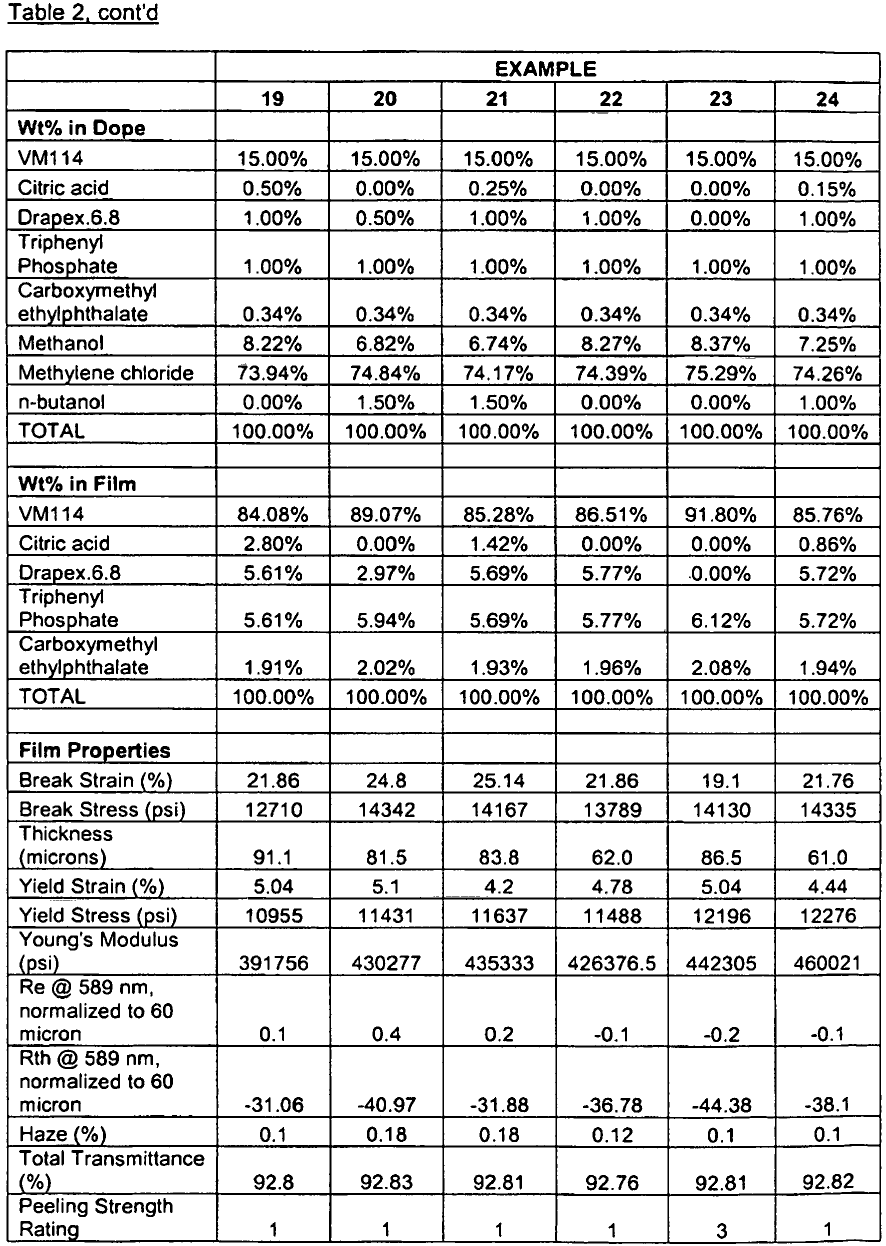

Examples 1-24 showed that there were no significant changes for planar retardation (Re), break strain, break stress, yield strain, Young's Modulus, haze, or total transmission, based on changes in the amount of the citric acid, ESO, and n-butanol. Yield stress showed slight decrease as the ESO level increased, and the thickness retardation (Rth) showed a decrease with increasing citric acid content.

### Examples 25-28

Three batches of dope were made and formed into films on a commercial pressure casting line. The batches of dope were prepared by adding a mixture of methylene chloride and methanol to a mixing vessel having a rotating stirrer. The VM114 and all other ingredients except citric acid were then added to the stirred vessel. Once a solution was obtained that was free of undissolved material, the citric acid was added to the solution. Stirring was continued for one hour. The film casting solution was then passed through filtration devices, and film was cast at the target thickness. The composition of the dopes and films, and the films' properties are reported in Table 3.

Peeling force in Table 3 was measured continuously by pressure transducers in the takeoff roll that peels the film from the casting belt.

Knurling pressure ratio in Table 3 is the ratio of force required to impart the knurling pattern of each experimental film to that typically seen for 100% lint-based CTA film.

**Table 3**

| | **EXAMPLE** | | | |
|---|---|---|---|---|
| | **25** | **26** | **27** | **28** |
| | Batch 1 | Batch 2 | Batch 3 | Batch 3 |
| **Wt% in Dope** | | | | |
| VM114 | 8.625% | 12.75% | 16.75% | |
| VM149 | 8.625% | 4.25% | 0.00% | |
| Citric acid | 0.057% | 0.056% | 0.055% | |
| Drapex.6.8 | 0.57% | 0.56% | 0.56% | |
| Triphenyl Phosphate | 1.09% | 1.07% | 1.05% | |
| Carboxymethyl ethylphthalate | 0.25% | 0.24% | 0.24% | |
| Tinuvin 328 | 0.08% | 0.08% | 0.08% | |
| Neo Heliopan 357 | 0.05% | 0.05% | 0.04% | |
| Methanol | 8.07% | 8.10% | 8.12% | |
| Methylene chloride | 72.59% | 72.85% | 73.10% | |
| TOTAL | 100.00% | 100.00% | 100.00% | |
| | | | | |

| **Wt% in Film** | | | | |
|---|---|---|---|---|
| VM114 | 44.59% | 66.90% | 89.19% | |
| VM149 | 44.59% | 22.30% | 0.00% | |
| Citric acid | 0.29% | 0.30% | 0.30% | |
| Drapex.6.8 | 2.97% | 2.96% | 2.96% | |
| Triphenyl Phosphate | 5.62% | 5.61% | 5.61% | |
| Carboxymethyl ethylphthalate | 1.28% | 1.28% | 1.28% | |
| Tinuvin 328 | 0.42% | 0.42% | 0.42% | |
| Neo Heliopan 357 | 0.24% | 0.24% | 0.24% | |
| TOTAL | 100.00% | 100.00% | 100.00% | |
| | | | | |

| **Film Properties** | | | | |
|---|---|---|---|---|
| Wt% of Sulfite Softwood CTA | 50 | 75 | 100 | 100 |
| Wt% of Cotton Lint CTA | 50 | 25 | 0 | 0 |
| Film Thickness (microns) | 60 | 60 | 60 | 40 |
| Transmission (%) | 93.2 | 93.3 | 93.3 | 93.2 |
| Haze (%) | 0.19 | 0.15 | 0.09 | 0.09 |
| b* color | 0.40 | 0.33 | 0.35 | 0.40 |
| Rth @ 589 nm | 36.45 | 37.63 | 40.50 | 31.30 |
| Peeling Force from Casting Belt (N) | 110 | 109 | 110 | 109 |
| Knurling Pressure Ratio | 1.00 | 1.00 | 1.06 | 1.13 |

### Examples 29-34

Dopes and films were made following the procedures of Examples 1-24 with CTA derived from sulfite softwood, cotton lint, and hardwood having varying levels of sulfur to determine the peeling force required to separate the film from the casting substrate. These compositions were made to test the effect of sulfur on peeling force in the absence of the chelating agent and acid scavenger. The results indicate that the higher the sulfur level, the higher the peeling force.

The composition of the dopes and films, and the peeling force results are shown in Table 4.

**Table 4**

| | **EXAMPLE** | | | | | |
|---|---|---|---|---|---|---|
| | **29** | **30** | **31** | **32** | **33** | **34** |
| **Wt% in Dope** | | | | | | |
| VM114, sulfite softwood, 11 ppm S | 13.65% | ---- | ---- | ---- | ---- | ---- |
| VM149, lint, 9 ppm S | ---- | 13.65% | ---- | ---- | ---- | ---- |
| PHK Hardwood CTA , 70 ppm S | ---- | ---- | 13.65% | ---- | ---- | ---- |
| Lint CTA, 37 ppm S | ---- | ---- | ---- | 13.65% | ---- | ---- |
| Lint CTA, 16 ppm S | ---- | ---- | ---- | ---- | 13.65% | ---- |
| Lint CTA, 25 ppm S | ---- | ---- | ---- | ---- | ---- | 13.65% |
| Triphenyl phosphate | 1.35% | 1.35% | 1.35% | 1.35% | 1.35% | 1.35% |
| Methylene chloride | 76.50% | 76.50% | 76.50% | 76.50% | 76.50% | 76.50% |
| Methanol | 8.50% | 8.50% | 8.50% | 8.50% | 8.50% | 8.50% |
| | | | | | | |

| **Wt% in Film** | | | | | | |
|---|---|---|---|---|---|---|
| VM114, sulfite softwood, 11 ppm S | 91.00% | ---- | ---- | ---- | ---- | ---- |
| VM149, lint, 9 ppm S | ---- | 91.00% | ---- | ---- | ---- | ---- |
| PHK Hardwood CTA , 70 ppm S | ---- | ---- | 91.00% | ---- | ---- | ---- |
| Lint CTA, 37 ppm S | ---- | ---- | ---- | 91.00% | ---- | ---- |
| Lint CTA, 16 ppm S | ---- | ---- | ---- | ---- | 91.00% | ---- |
| Lint CTA, 25 ppm S | ---- | ---- | ---- | ---- | ---- | 91.00% |
| Triphenyl phosphate | 9.00% | 9.00% | 9.00% | 9.00% | 9.00% | 9.00% |
| | | | | | | |
| Sulfur in CTA (ppm) | 11 | 9 | 70 | 37 | 16 | 25 |
| Average Peeling Force (g) | 85 | 64 | 152 | 98 | 81 | 104 |

Samples of CTA having a range of sulfur content were made using sulfite softwood pulp as shown in Table 5. Above about 35 ppm sulfur content, increased peeling force from the casting substrate is observed when using the target amounts of additives.

**Table 5**

| % in Film | 1 | 2 | 3 | 4 |
|---|---|---|---|---|
| Sulfite Softwood 0.80% Xylose, 0.97% Mannose (24.5 ppm 5) | 89.82% | ---- | ---- | ---- |
| Sulfite Softwood 0.80% Xylose, 0.97% Mannose (33.5 ppm S) | ---- | 89.82% | ---- | ---- |
| Sulfite Softwood 0.80% Xylose, 0.97% Mannose (40.1 ppm S) | ---- | ---- | 89.82% | ---- |
| Sulfite Softwood 0.80% Xylose, 0.97% Mannose (48.9 ppm S) | ---- | ---- | ---- | 89.82% |
| Citric acid | 0.15% | 0.15% | 0.15% | 0.15% |
| Drapex.6.8 | 1.50% | 1.50% | 1.50% | 1.50% |
| Triphenyl Phosphate | 7.49% | 7.49% | 7.49% | 7.49% |
| Carboxymethyl ethylphthalate | 1.05% | 1.05% | 1.05% | 1.05% |
| Qualitative Peel Rating | 1 | 1.5 | 2 | 3 |

Additional sulfite softwood pulps having higher levels of the hemicelluloses impurities, xylan and mannan, were used to make CTA. Table 6 shows such pulps containing that up to 2% xylose and 1% mannose produce CTA having good peeling characteristics from casting belt substrate.

**Table 6**

| **% in Film** | 1 | 2 | 3 |
|---|---|---|---|
| Softwood Sulfite Pulp 0.80% Xylose, 0.97% Mannose | 89.82% | ---- | ---- |
| Softwood Sulfite Pulp 1.68% Xylose, 1.10% Mannose | ---- | 89.82% | ---- |
| Softwood Sulfite Pulp 1.94% Xylose, 1.19% Mannose | ---- | ---- | 89.82% |
| Citric acid | 0.15% | 0.15% | 0.15% |
| Drapex.6.8 | 1.50% | 1.50% | 1.50% |
| Triphenyl Phosphate | 7.49% | 7.49% | 7.49% |
| Carboxymethyl ethylphthalate | 1.05% | 1.05% | 1.05% |
| Total | 100.00% | 100.00% | 100.00% |
| Qualitative Peel Rating | 1 | 1 | 1 |
| C1E b* Color | 0.184 | 0.215 | 0.263 |

Stability of optical properties is very important in LCD films. Durability testing was carried out for 1000 hours at 60°C and 95% relative humidity on the films shown in Table 7.

**Table 7**

| **% in Film** | 1 | 2 | 3 | 4 | 5 |
|---|---|---|---|---|---|
| VM149 | 89.72% | 89.85% | | --- | --- |
| VM114 | --- | --- | 89.72% | 89.85% | 89.99% |
| Citric acid | 0.30% | 0.15% | 0.30% | 0.15% | 0.00% |
| Drapex.6.8 | 2.99% | 1.50% | 2.99% | 1.50% | 0.00% |
| Triphenyl Phosphate | 6.99% | 8.50% | 6.99% | 8.50% | 10.01% |
| | | | | | |

| CIE L* | | | | | |
|---|---|---|---|---|---|
| 0 Hours @ 60°C, 95% RH | 97.16 | 97.14 | 97.16 | 97.17 | 97.14 |
| 500 Hours @ 60°C, 95% RH | 97.08 | 97.13 | 97.13 | 97.14 | 97.14 |
| 1000 Hours @ 60°C, 95% RH | 97.06 | 97.08 | 97.12 | 97.14 | 97.11 |

| CIE a* | | | | | |
|---|---|---|---|---|---|
| 0 Hours @ 60°C, 95% RH | 0.000 | 0.000 | 0.000 | 0.000 | 0.000 |
| 500 Hours @ 60°C, 95% RH | 0.150 | 0.100 | 0.035 | 0.100 | 0.010 |
| 1000 Hours @ 60°C, 95% RH | 0.050 | 0.100 | 0.010 | 0.100 | 0.015 |

| CIE b* | | | | | |
|---|---|---|---|---|---|
| 0 Hours @ 60°C, 95% RH | 0.2 | 0.2 | 0.2 | 0.1 | 0.2 |
| 500 Hours @ 60°C, 95% RH | 0.3 | 0.2 | 0.2 | 0.2 | 0.2 |
| 1000 Hours @ 60°C, 95% RH | 0.3 | 0.2 | 0.2 | 0.2 | 0.1 |

| Haze | | | | | |
|---|---|---|---|---|---|
| 0 Hours @ 60°C, 95% RH | 0.31 | 0.49 | 0.30 | 0.26 | 0.39 |
| 500 Hours @ 60°C, 95% RH | 0.91 | 0.33 | 0.40 | 0.30 | 0.40 |
| 1000 Hours @ 60°C, 95% RH | 0.94 | 0.50 | 0.43 | 0.30 | 0.39 |

| Planar Retardation 0f 60 micron films @ 589 nm | | | | | |
|---|---|---|---|---|---|
| 0 Hours @ 60°C, 95% RH | 0.47 | 0.05 | 1.42 | 0.74 | 1.59 |
| 500 Hours @ 60°C, 95% RH | 0.73 | 0.78 | 0.84 | 0.40 | 0.70 |
| 1000 Hours @ 60°C, 95% RH | 0.52 | 0.83 | 0.66 | 0.52 | 0.42 |

| Thickness Retardation 0f 60 micron films @ 589 nm | | | | | |
|---|---|---|---|---|---|
| 0 Hours @ 60°C, 95% RH | -42.3 | -45.4 | -39.3 | -43.5 | -46.1 |
| 500 Hours @ 60°C, 95% RH | -38.5 | -42.7 | -39.6 | -39.8 | -44.5 |
| 1000 Hours @ 60°C, 95% RH | -38.5 | -44.3 | -41.9 | -45.7 | -44.7 |

The data shows the sulfite softwood CTA (VM 114) to have very stable optical properties at the target levels of 1.5% acid scavenger and 0.15% citric acid. These stable optical properties are very important for use in LCD applications.

Belt deposits cause very tiny indentations in the film surface, which manifests itself as haze when the film is viewed at an angle. Such haze makes the films unacceptable, and the belt has to be cleaned. This down time reduces production and increases cost. In order to measure the effectiveness of the chelating agent in preventing deposits of salts on the film casting belt, an additional 30 day trial was made on the commercial film casting line using the target levels of 1.5% acid scavenger and 0.15% citric acid. No belt deposits occurred.

## Claims

1. A dope for making a solvent-cast film comprising:
(a) cellulose triacetate made from sulfite-process softwood pulp and having less than 35 ppm of sulfur and less than 2 weight percent of xylose, both based on the weight of the cellulose triacetate, and a molar ratio of metals to sulfate of at least 3:1;
(b) an acid scavenger;
(c) a chelating agent; and
(d) a solvent.

2. The dope according to claim 1, wherein the cellulose triacetate has 8 to 15 ppm of sulfur, 0.5 to 0.6 weight percent xylose and at least 98 weight percent α-cellulose.

3. The dope according to claim 1, which comprises from 15 to 23 weight percent of the cellulose triacetate.

4. The dope according to claim 1, which comprises from 0.1 to 1 weight percent of the acid scavenger.

5. The dope according to claim 1, wherein the acid scavenger comprises epoxidized plant oil.

6. The dope according to claim 1, which comprises 0.01 to 0.1 weight percent of the chelating agent.

7. The dope according to claim 1, wherein the chelating agent comprises citric acid.

8. The dope according to claim 1, wherein the solvent comprises methylene chloride and from 6 to 20 weight percent of at least one of methanol and ethanol, based on the weight of the solvent.

9. The dope according to claim 1 comprising:
(a) 8 to 15 ppm of sulfur; 0.8 weight percent or less of xylose, and at least 98 weight percent of α-cellulose, all based on the weight of the cellulose triacetate;
(b) the acid scavenger comprising epoxidized soybean oil; and
(c) the chelating agent comprising citric acid.

10. A film comprising:
(a) cellulose triacetate made from sulfite-process softwood pulp and having less than 35 ppm of sulfur and less than 2weight percent of xylose, both based on the weight of the cellulose triacetate, and a molar ratio of metals to sulfate of at least 3:1;
(b) an acid scavenger; and
(c) a chelating agent.

11. The film according to claim 10, the film comprising:
(a) 8 to 15 ppm of sulfur, 0.8 weight percent or less of xylose, and at least 98 weight percent of α-cellulose, all based on the weight of the cellulose triacetate;
(b) the acid scavenger comprising epoxidized soybean oil; and
(c) the chelating agent comprising citric acid.

12. The film according to claim 11, which has a thickness of 20 to 100 microns.

13. The film according to claim 11, which comprises from 1 to 5 weight percent of the acid scavenger.

14. The film according to claim 11, which comprises 0.1 to 0.5 weight percent of the chelating agent.

15. The film according to claim 11, which comprises from 80 to 95 weight percent of the cellulose triacetate.

16. A method of preparing the dope according to any of claims 1 or 9, which comprises:
(a) combining the cellulose triacetate, the acid scavenger, and the solvent together to form a solution; and
(b) adding the chelating agent to the solution from step (a) to form the dope.

17. A method of making a film comprising:
(a) casting the dope according to any of claims 1 or 9 onto a continuously moving support to form a cast film on the support;
(b) partially drying the cast film;
(c) separating the cast film from the support; and
(d) drying the separated film.

18. A polarizer plate for a liquid crystal display comprising the film according to any of claims 10 or 11.

19. An optical lens comprising the film according to any of claims 10 or 11.

## Patentansprüche

1. Zusatzstoff zur Herstellung einer Lösungsmittel-gegossenen Folie, umfassend:
(a) Cellulosetriacetat, das aus Weichholzzellstoff aus einem Sulfitverfahren hergestellt wurde und weniger als 35 ppm Schwefel und weniger als 2 Gewichtsprozent Xylose, beides basierend auf dem Gewicht des Cellulosetriacetats, und ein Molverhältnis von Metallen zu Sulfat von mindestens 3 : 1 aufweist;
(b) einen Säurefänger;
(c) einen Chelatbildner und
(d) ein Lösungsmittel.

2. Zusatzstoff nach Anspruch 1, wobei das Cellulosetriacetat 8 bis 15 ppm Schwefel, 0,5 bis 0,6 Gewichtsprozent Xylose und mindestens 98 Gewichtsprozent α-Cellulose aufweist.

3. Zusatzstoff nach Anspruch 1, der 15 bis 23 Gewichtsprozent des Cellulosetriacetats umfasst.

4. Zusatzstoff nach Anspruch 1, der 0,1 bis 1 Gewichtsprozent des Säurefängers umfasst.

5. Zusatzstoff nach Anspruch 1, wobei der Säurefänger epoxidiertes Pflanzenöl umfasst.

6. Zusatzstoff nach Anspruch 1, der 0,01 bis 0,1 Gewichtsprozent des Chelatbildners umfasst.

7. Zusatzstoff nach Anspruch 1, wobei der Chelatbildner Zitronensäure umfasst.

8. Zusatzstoff nach Anspruch 1, wobei das Lösungsmittel Methylenchlorid und 6 bis 20 Gewichtsprozent von mindestens einem von Methanol und Ethanol, basierend auf dem Gewicht des Lösungsmittels, umfasst.

9. Zusatzstoff nach Anspruch 1, umfassend:
(a) 8 bis 15 ppm Schwefel, 0,8 Gewichtsprozent oder weniger Xylose und mindestens 98 Gewichtsprozent α-Cellulose, alle basierend auf dem Gewicht des Cellulosetriacetats;
(b) den Säurefänger, der epoxidiertes Sojabohnenöl umfasst; und
(c) den Chelatbildner, der Zitronensäure umfasst.

10. Folie, umfassend:
(a) Cellulosetriacetat, das aus Weichholzzellstoff aus einem Sulfitverfahren hergestellt wurde und weniger als 35 ppm Schwefel und weniger als 2 Gewichtsprozent Xylose, beides basierend auf dem Gewicht des Cellulosetriacetats, und ein Molverhältnis von Metallen zu Sulfat von mindestens 3 : 1 aufweist;
(b) einen Säurefänger und
(c) einen Chelatbildner.

11. Folie nach Anspruch 10, wobei die Folie umfasst:
(a) 8 bis 15 ppm Schwefel, 0,8 Gewichtsprozent oder weniger Xylose und mindestens 98 Gewichtsprozent α-Cellulose, alle basierend auf dem Gewicht des Cellulosetriacetats;
(b) den Säurefänger, der epoxidiertes Sojabohnenöl umfasst; und
(c) den Chelatbildner, der Zitronensäure umfasst.

12. Folie nach Anspruch 11, die eine Dicke von 20 bis 100 Mikrometern hat.

13. Folie nach Anspruch 11, die 1 bis 5 Gewichtsprozent des Säurefängers umfasst.

14. Folie nach Anspruch 11, die 0,1 bis 0,5 Gewichtsprozent des Chelatbildners umfasst.

15. Folie nach Anspruch 11, die 80 bis 95 Gewichtsprozent des Cellulosetriacetats umfasst.

16. Verfahren zur Herstellung des Zusatzstoffs nach einem der Ansprüche 1 oder 9, der umfasst:
(a) das Vereinigen des Cellulosetriacetats, des Säurefängers und des Lösungsmittels unter Bildung einer Lösung; und
(b) das Zugeben des Chelatbildners zu der Lösung aus Schritt (a) unter Bildung des Zusatzstoffes.

17. Verfahren zur Herstellung einer Folie, umfassend:
(a) das Gießen des Zusatzstoffes nach einem der Ansprüche 1 oder 9 auf einen sich kontinuierlich bewegenden Träger unter Bildung einer gegossenen Folie auf dem Träger;
(b) das teilweise Trocknen der gegossenen Folie;
(c) das Trennen der gegossenen Folie von dem Träger und
(d) das Trocknen der abgetrennten Folie.

18. Polarisatorplatte für eine Flüssigkristallanzeige, umfassend die Folie nach einem der Ansprüche 10 oder 11.

19. Optische Linse, umfassend die Folie nach einem der Ansprüche 10 oder 11.

## Revendications

1. Un additif pour préparer un film coulé à l'aide d'un solvant comprenant :
(a) du triacétate de cellulose fabriqué à partir de pâte de bois résineux obtenue selon un procédé au sulfite et présentant moins de 35 ppm de soufre et moins de 2 pourcent en poids de xylose, les deux étant basés sur le poids du triacétate de cellulose, et un rapport molaire de métaux par rapport au sulfate d'au moins 3 :1 ;
(b) un fixateur d'acide;
(c) un agent chélatant ; et
(d) un solvant.

2. Additif selon la revendication 1, dans lequel le triacétate de cellulose présente 8 à 15 ppm de soufre, 0.5 à 0.6 pourcent en poids de xylose et au moins 98 pourcent en poids d'α-cellulose.

3. Additif selon la revendication 1, comprenant de 15 à 23 pourcent en poids de triacétate de cellulose.

4. Additif selon la revendication 1, comprenant de 0.1 à 1 pourcent en poids dudit fixateur d'acide.

5. Additif selon la revendication 1, dans lequel le fixateur d'acide comprend une huile végétale époxydée.

6. Additif selon la revendication 1, comprenant 0.01 à 0.1 pourcent en poids dudit agent chélatant.

7. Additif selon la revendication 1, dans lequel l'agent chélatant comprend de l'acide citrique.

8. Additif selon la revendication 1, dans lequel le solvant comprend du chlorure de méthylène et de 6 à 20 pourcent en poids d'au moins l'un parmi le méthanol et l'éthanol, basés sur le poids du solvant.

9. Additif selon la revendication 1, comprenant :
(a) 8 à 15 ppm de soufre, 0.8 pourcent en poids ou moins de xylose, et au moins 98 pourcent en poids d'α-cellulose, tous basés sur le poids du triacétate de cellulose ;
(b) ledit fixateur d'acide qui comprend de l'huile de soja époxydée ; et
(c) ledit agent chélatant qui comprend de l'acide citrique.

10. Film comprenant :
(a) du triacétate de cellulose fabriqué à partir de pulpe de bois résineux obtenu par un procédé au sulfite et présentant moins de 35 ppm de soufre et moins de 2 pourcent en poids de xylose, les deux étant basés sur le poids du triacétate de cellulose, et un rapport molaire de métaux par rapport au sulfate d'au moins 3 :1;
(b) un fixateur d'acide ;
(c) un agent chélatant.

11. Film selon la revendication 10, le film comprenant :
(a) 8 à 15 ppm de soufre, 0.8 pourcent en poids ou moins de xylose, et au moins 98 pourcent en poids d'α-cellulose, tous basés sur le poids du triacétate de cellulose ;
(b) ledit fixateur d'acide qui comprend de l'huile de soja époxydée ; et
(c) ledit agent chélatant qui comprend de l'acide citrique.

12. Film selon la revendication 11, présentent une épaisseur de 20 à 100 microns.

13. Film selon la revendication 11, comprenant de 1 à 5 pourcent en poids dudit fixateur d'acide.

14. Film selon la revendication 11, comprenant 0.1 à 0.5 pourcent en poids dudit agent chélatant.

15. Film selon la revendication 11, comprenant de 80 à 95 pourcent en poids dudit triacétate de cellulose.

16. Un procédé de préparation selon l'une quelconque des revendications 1 ou 9, comprenant les étapes de :
(a) mélanger le triacétate de cellulose, le fixateur d'acide, et le solvant pour former une solution ; et
(b) additioner l'agent chélatant à la solution de l'étape (a) pour former un additif.

17. Procédé pour fabriquer un film comprenant les étapes de :
(a) couler de l'additif selon l'une des revendications 1 ou 9 sur un support en déplacement continu pour former un film coulé sur ledit support ;
(b) sécher partiellement le film coulé ;
(c) séparer le film coulé dudit support ; et
(d) sécher le film séparé.

18. Plaque de polarisation pour un affichage à cristaux liquide comprenant le film selon l'une des revendications 10 ou 11.

19. Une lentille optique comprenant le film selon l'une des revendications 10 ou 11.
